# EUROPÄISCHE PATENTSCHRIFT

(11) **EP 0 666 836 B1**
(45) Veröffentlichungstag und Bekanntmachung des Hinweises auf die Patenterteilung: **29.01.1997**
(21) Anmeldenummer: 94900074.9
(22) Anmeldetag: 22.10.1993
(51) Int. Cl.: C03B 37/014

(54) **VERFAHREN UND VORRICHTUNG ZUR VORFORMHERSTELLUNG FÜR QUARZGLAS-LICHTWELLENLEITER**
PROCESS AND DEVICE FOR PRODUCING PREFORMS FOR SILICA GLASS OPTICAL WAVEGUIDES
PROCEDE ET DISPOSITIF DE REALISATION DE PREFORMES POUR GUIDES D'ONDES LUMINEUSES EN VERRE QUARTZEUX

(30) Priorität: 29.10.1992 DE 4236578
(43) Veröffentlichungstag der Anmeldung: 16.08.1995
(73) Patentinhaber: Heraeus Quarzglas GmbH, D-63450 Hanau (DE)
(72) Erfinder: HEITMANN, Walter, D-64401 Gro -Bieberau (DE)
(86) Internationale Anmeldenummer: EP9302919
(87) Internationale Veröffentlichungsnummer: WO9410097

(56) Entgegenhaltungen:
- EP-A- 0 163 752
- US-A- 4 165 223
- US-A- 4 286 978
- US-A- 4 402 720
- US-A- 4 734 117

## Beschreibung

Die Erfindung bezieht sich auf ein Verfahren zur Vorformherstellung für Quarzglas-Lichtwellenleiter entsprechend dem Oberbegriff des Anspruchs 1, welches für die Herstellung optischer Übertragungseinrichtungen der Nachrichtentechnik verwendbar ist.

Weiterhin wird hierzu eine Vorrichtung entsprechend dem Oberbegriff des Anspruchs 4 behandelt, welche zur Durchführung eines solchen Verfahrens geeignet ist.

In der optischen Nachrichtentechnik werden in großem Umfang Lichtwellenleiter (LWL) auf Quarzglasbasis eingesetzt. Diese LWL werden aus Quarzglasstäben von 1 m bis 2 m Länge und Durchmessem zwischen 2 cm und 10 cm gezogen, die als Vorform (englisch: preform) bezeichnet werden. Zu den wesentlichen Anforderungen an das Vorformmaterial gehört eine extrem hohe Reinheit, weil schon Verunreinigungskonzentrationen im ppb- Bereich (10⁻⁹) starke Absorptionsverluste im LWL verursachen können.

Zur Herstellung von LWL sind eine Reihe von Verfahren bekannt, die z.B. in dem Buch: "Optische Telekommunikationssysteme" dargestellt sind. Die vier wichtigsten Verfahren in der Reihenfolge ihrer wirtschaftlichen Bedeutung sind:
OVD (Outside Vapor Deposition),
MCVD (Modified Chemical Vapor Deposition),
VAD (Vapor Axial Deposition) und
PCVD (Plasma-activated Chemical Vapor Deposition).

Beim MCVD- und PCVD-Verfahren ist ein Substratrohr aus Quarzglas erforderlich, in dem dann das LWL-Material abgeschieden wird. Zwar werden an das Material des Substratrohrs nicht die gleichen Reinheitsanforderungen gestellt, es müssen jedoch sehr geringe OH-Konzentrationen eingehalten werden, die einen entsprechenden Aufwand beim Herstellungsprozeß der Substratrohre bedingen. Gleiches gilt für die sogenannten Überfangrohre.

Weil sich im LWL der größte Teil der Lichtleistung im Kern und einer anschließenden dünnen Mantelzone konzentriert, wird zunehmend aus wirtschaftlichen Gründen nur dieser Innenbereich aus hochreinem LWL-Material hergestellt und darauf ein dickwandiges Rohr (Überfangrohr) aufgeschmolzen, das aus Quarzglas mit etwas höherer Verunreinigungskonzentration besteht. Jedoch darf auch bei solchem Überfangrohr der OH- Gehalt nur sehr gering sein.

Das OVD-Verfahren (Corning/USA) ist der wirtschaftlich bedeutendste Prozeß zur Vorformherstellung, nach dem der größte Anteil der Vorformen produziert wird. Das Verfahren zeichnet sich durch einfache Produktionsprozesse und die Möglichkeit zur Herstellung sehr großer Vorformen aus.

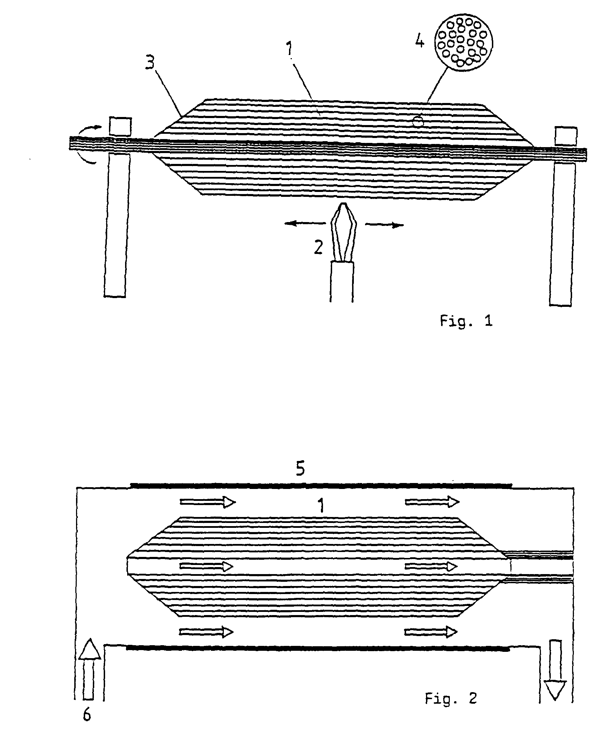

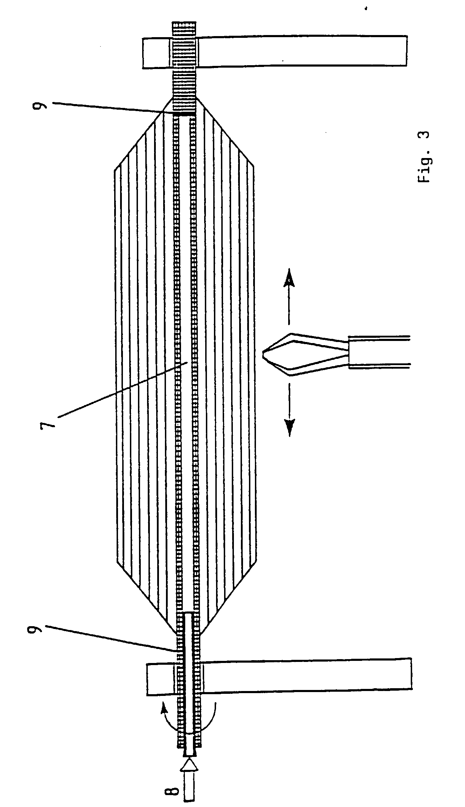

Die Prozeßschritte zur Vorformherstellung nach dem OVD- Verfahren sind in den Figuren 1 und 2 schematisch dargestellt. Wie Fig. 1 zeigt, wird zunächst ein großer Quarzglaskörper 1 aus feinporigem Material aufgebaut. Dazu fährt ein Brenner 2, der mit Methan (CH₄) und Sauerstoff unter Zusatz von Siliziumtetrachlorid (SiCl₄) betrieben wird, an einem rotierenden Keramikstab 3 (Al₂O₃) hin und her.

Durch eine chemische Reaktion in der Flamme, die als Hydrolyse bezeichnet wird, bildet sich Quarzglas, das sich als poröses, weißes Material schichtweise niederschlägt. Dieses auch als Glasruß bezeichnete Material hat, gesteuert durch die Hydrolyse, eine Dichte von 10 % bis höchstens 25 % des massiven Quarzglases und besteht aus punktweise miteinander verschmolzenen Kügelchen 4 sehr geringen Durchmessers.

Zur Herstellung von dotiertem Quarzglas wird den Brennergasen beispielsweise Germaniumtetrachlorid (GeCl₄) beigefügt und dadurch ein GeO₂-dotiertes Material mit erhöhter Brechzahl erzeugt.

Bei der Hydrolyse entsteht neben Quarzglas auch eine große Menge an Wasserdampf. Dieser wird in Form von OH-lonen in hohen Konzentrationen (etwa 1000 ppm) in das poröse Quarzglas eingebaut.

Wenn die gewünschte Menge von Quarzglas aufgewachsen ist, wird der Brenner abgeschaltet. Während der Abkühlung zieht sich der Substratstab wegen seines größeren Ausdehnungs- koeffizienten stärker zusammen als der Quarzglaskörper, so daß der Stab herausgezogen werden kann. Das so produzierte Material ist wegen seines hohen OH-Gehalts für die LWL-Herstellung noch ungeeignet und muß in weiteren Verfahrensschritten getrocknet werden.

Zur Trocknung wird, wie in Fig. 2 dargestellt, der poröse Quarzglaskörper 1 in einen Ofen 5 eingebracht. In einem ersten Schritt, der physikalischen Trocknung, wird in ca. 2 Stunden bei 800 °C und Spülung 6 mit trockenen Reinstgasen (Stickstoff, Sauerstoff, Helium) der OH-Gehalt im Quarzglas von etwa 1000 ppm auf ca. 10 ppm reduziert.

Beim zweiten Schritt, der chemischen Trocknung, erfolgt die Spülung 6 mit Chlor- oder Thionylchlorid (SOCl₂)-Gas und Helium. Diese chemisch aktive Gasmischung umströmt den porösen Quarzglaskörper für mehrere Stunden bei etwa 800 °C.

Die OH-lonen in den Quarzglaskügelchen diffundieren an die Oberfläche, reagieren mit dem Trockengas zu HCI-Gas, das allmählich aus dem Quarzglaskörper heraustransportiert wird. Dadurch kann der OH-Gehalt im Material auf Werte unter 0,01 ppm abgesenkt werden. Dieser niedrige OH-Gehalt ist erforderlich, um die OH-Absorptionsbande in dem aus dem Quarzglas gezogenen LWL deutlich auf unter 1 dB/km abzusenken.

Anschließend wird die Ofentemperatur so weit erhöht, daß der poröse Quarzglaskörper zu einem massiven Stab verschmilzt.

Bei der Herstellung von Substratrohren für MCVD- und PCVD-Vorformen und von Überfangrohren wird der poröse Quarzglaskörper mit einem wesentlich größeren Innendurchmesser hergestellt und nach der Trocknung zu einem massiven Rohr verschmolzen.

Der Trocknungsprozeß stellt wegen seiner vielstündigen Dauer und des großen Bedarfs an aggressiven Trocknungsgasen, die ständig frisch und mit hoher Reinheit durch den Ofen strömen müssen, einen zeit- und kostenintensiven Verfahrensschritt dar. Die Entsorgung der dabei anfallenden großen Abgasmengen verursacht erhebliche Kosten.

Ziel der Erfindung ist die deutliche Verringerung der beschriebenen Mängel, verbunden mit einer wesentlichen Produktionszeit- und Kostenreduzierung.

Die Aufgabe der Erfindung ist eine Weiterentwicklung der beschriebenen Verfahren, insbesondere des OVD-Verfahrens, zu einer Modifikation, welche die Trocknungszeiten und den Verbrauch an aggressiven Trocknungsgasen drastisch vermindert.

Die erfindungsgemäße Modifikation ist im Kennzeichen des Anspruchs 1 beschrieben. Mit den Merkmalen der Kennzeichen der Ansprüche 2 und 3 werden Weiterbildungsmöglichkeiten des Verfahrens angegeben.

Zur Durchführung des Verfahrens geeignete Veränderungen der Vorrichtungen zeigt das Kennzeichen des Anspruchs 4. Eine vorteilhafte Weiterbildungsmöglichkeit hierzu ist im Kennzeichen des Anspruchs 5 beschrieben.

### Ausführungsbeispiel:

Details der Erfindung, sowie deren Wirkungsweise und Vorteile sind nachfolgendem Ausführungsbeispiel entnehmbar. In den zugehörigen Zeichnungen zeigen die
Fig. 1 den Abscheidungsprozess beim OVD-Verfahren
Fig. 2 den Trocknungsprozess beim OVD-Verfahren und
Fig. 3 das erfindungsgemäß modifizierte Verfahren.

Die Beschreibung des OVD-Verfahrens erfolgte bereits anhand der Fig. 1 und 2 in der Beschreibung des Standes der Technik zu Beginn.

Das erfindungsgemäß modifizierte Verfahren wird nachfolgend kurz als MOVD-Verfahren (Modified Outside Vapor Deposition) bezeichnet. Die Beschreibung des MOVD-Verfahrens erfolgt anhand der in Fig. 3 schematisch dargestellten Vorrichtung.

Der beim konventionellen OVD-Verfahren übliche Substratstab ist durch ein Substratrohr 7 aus feinporiger, gasdurchlässiger Keramik, vorzugsweise aus Aluminiumoxyd oder Zirkonoxyd, ersetzt. Über eine nicht eingezeichnete, gasdichte Drehdurchführung wird in den Innenraum des Substratrohres unter Überdruck ein Gasgemisch 8 aus einem chemisch aktiven Gas wie Chlor oder Thionylchlorid und weiteren Gasen wie Helium, Argon und Sauerstoff geleitet.

Der Innendruck im Substratrohr, die Wandstärke und die Gasdurchlässigkeit des Rohrmaterials werden so gewählt, daß bei der hydrolytischen Abscheidung des porösen Quarzglases der Wasserdampf aus den Brennergasen nicht in das Innere des Glaskörpers eindringen kann. Während des mehrstündigen Abscheidungsprozesses strömt kontinuierlich frisches Trocknungsgasgemisch von innen nach außen und entzieht dabei dem Quarzglas die bei der Kondensation eingebauten OH-lonen.

Im Gegensatz zum herkömmlichen OVD-Verfahren, bei dem während der gesamten Abscheidungszeit in den Hohlräumen zwischen den Quarzglaskügelchen ein hoher Partialdruck von Wasserdampf vorhanden ist, strömt beim erfindungsgemäßen Verfahren stets Trocknungsgasgemisch durch das poröse Material und führt während dieses bei hoher Temperatur mehrere Stunden andauernden Prozesses zu nahezu vollständigem Abbau der OH-lonen.

Die OH-Konzentration ist im Gegensatz zum OVD-Prozeß beim MOVD-Prozeß im achsennahen Bereich am geringsten, also gerade in der Zone, in der das Kernmaterial für den LWL niedergeschlagen wird und das auf die Absorption in der Faser den stärksten Einfluß hat.

Beim MOVD-Verfahren werden Abscheidung und Trocknung gleichzeitig im ersten Schritt durchgeführt. Dabei wird das Trocknungsgas wesentlich ökonomischer als beim OVD-Verfahren eingesetzt. Während beim OVD-Verfahren große Gasmengen am porösen Glaskörper vorbeiströmen, wird beim neuen Verfahren das Trocknungsgas zwangsweise durch das Material geführt. Die geringen Mengen an Trocknungsgas, die beim MOVD-Verfahren anfallen und aus der Oberfläche des porösen Quarzglaskörpers austreten, können zusammen mit der größeren Menge der Hydrolyseabgase entsorgt werden.

Wie schon erwähnt, wird bei OVD-Verfahren ein poröser Quarzglaskörper mit einer Dichte von 10 % bis 25 % des massiven Quarzglases hergestellt. Die geringe Dichte ist notwendig, damit die Trocknung, die über einen relativ langsamen Gasaustausch abläuft, nicht unvertretbar lange Zeit in Anspruch nimmt. Beim MOVD-Verfahren dagegen kann wegen des wesentlich effektiveren Trocknungsprozesses die Dichte des Quarzglaskörpers mindestens verdoppelt werden. Dadurch ergeben sich zwei wichtige Vorteile: Erstens ist der Quarzglaskörper stabiler und die Bruchgefahr beim Ablösen vom Substratrohr und den folgenden Verfahrensschritten geringer. Zweitens ergeben sich beim Zusammenschmelzen entsprechend größere Vorformen bzw. dickwandigere Rohre.

Nach Abschluß der Quarzabscheidung und Abschalten des Brenners wird der Trocknungsgasstrom während der Abkühlung des Glaskörpers so lange aufrecht erhalten, bis die Temperatur etwa auf 50 °C abgesunken ist. Dadurch wird die äußere Randzone, die noch eine gewisse OH-Konzentration enthalten kann, weiter getrocknet und das Eindringen von Wasserdampf aus der Umgebungsluft in das poröse Material verhindert. Anschließend wird der Glaskörper vom Keramikrohr abgenommen und unter Einwirkung des üblichen Trocknungsgasgemisches zu einem massiven Stab zusammengeschmolzen.

Substratrohre für MCVD- und PCVD-Vorformen und für Überfangrohre sind in gleicher Weise auch aus nahezu OH-freiem Quarzglas herstellbar. Statt eines Keramikrohrs mit relativ kleinem Innen- und Außendurchmesser wird für die Rohrherstellung ein Substratrohr mit entsprechend größerem Durchmesser verwendet und das poröse Quarzglasrohr hicht zum Stab kollabiert, sondern nur die Rohrwandung zu dichtem Quarzglas zusammengeschmolzen.

Da beim MOVD-Verfahren die Trocknungsgase nur im Bereich der Quarzglasabscheidung ausströmen sollen, ist es zweckmäßig und zum Schutz der Lager in den Halterungen auch notwendig, das Substratrohr in den übrigen Bereichen mit gasdichten Einschüben 9 oder Sinterzonen zu versehen.

Abschließend werden die wichtigsten Vorzüge des erfindungsgemäßen Verfahrens noch einmal zusammengefaßt:

Beim MOVD-Verfahren werden Glasabscheidung und Trocknung in einem Schritt durchgeführt. Dadurch werden mehrere Stunden Produktionszeit und große Mengen von aggressiven Trocknungsgasen eingespart. Damit verbunden ist eine erhebliche Senkung der Kosten für die Entsorgung der Abgase.

Aufgrund der sehr effektiven Trocknung kann die Dichte des porösen Glaskörpers erhöht werden und somit die Bruchgefahr bei der Weiterverarbeitung verringert und die Masse der herstellbaren Vorformen und Rohre deutlich vergrößert werden.

Vorhandene OVD-Apparaturen lassen sich mit geringem Aufwand für den Betrieb nach dem neuen MOVD-Verfahren umrüsten.

## Patentansprüche

1. Verfahren zur Vorformherstellung für Quarzglas- Lichtwellenleiter, bei dem mittels ortsveränderlicher Verbrennung eines Hydrolysegasgemisches, welches Siliziumtetrachlorid enthält, zunächst auf einem ebenfalls bewegten Keramik- Substratstab ein rohrförmiger poröser Niederschlag von teilverschmolzenen Quarzglaskügelchen aufwachsend gebildet wird, welcher in nachfolgenden thermischen Prozessen vom Substratstab getrennt, danach unter Trocknungsgaszufuhr in seinem OH-Gehalt reduziert und zuletzt bei weiterer Temperaturerhöhung zu einem massiven Stab verschmolzen wird, **dadurch gekennzeichnet**, daß bereits während des Aufwachsens des porösen Niederschlages aus der Verbrennung des Hydrolysegasgemisches und vorzugsweise einige Zeit darüber hinaus ein Trocknungsgasgemisch unter Überdruck von innen nach außen durch den rohrförmig aufwachsenden porösen Niederschlag hindurchgeleitet wird.

2. Verfahren nach Anspruch 1, dadurch gekennzeichnet, daß die Dichte der Niederschlags-Abscheidung der teilverschmolzenen Quarzglaskügelchen während des Trocknungsvorganges auf über 25 % der Dichte des massiven Quarzglases eingestellt wird.

3. Verfahren nach Anspruch 1, dadurch gekennzeichnet, daß für das Trocknungsgasgemisch Anteile von Chlor bzw. Thionylchlorid zusammen mit Helium und/oder Argon und/oder Sauerstoff verwendet werden.

4. Vorrichtung zur Vorformherstellung für Quarzglas- Lichtwellenleiter unter Verwendung eines Keramik- Substratstabes, dadurch gekennzeichnet, daß als Substratstab ein im Abscheidungsbereich poröses Rohr (7) aus Oxydkeramik, vorzugsweise aus Aluminium- bzw. Zirkonoxyd mit einem Trocknungsgas- Zuführungsanschluß (8) eingesetzt ist.

5. Vorrichtung nach Anspruch 4, dadurch gekennzeichnet, daß das poröse Rohr (7) einen Innendurchmesser zwischen 0,5 cm und 20 cm, eine Wandstärke von einigen Millimetern und gasdichte Abschnitte (9), im Längsbereich außerhalb des Abscheidungsbereiches, aufweist.

## Claims

1. A method of preform production for quartz glass optical wave guides, in which by means of movable combustion of a hydrolysis gas mixture, which contains silicon tetrachloride, firstly on a likewise moving ceramic substrate rod a tubular porous deposit of partially melted quartz glass globules is formed in an increasing manner, which deposit in subsequent thermal processes is separated from the substrate rod, is then reduced in its OH content under the supply of drying gas and is finally melted into a solid rod with further increase of temperature, characterised in that already during the increasing of the porous deposit from the combustion of the hydrolysis gas mixture and preferably some time beyond this, a drying gas mixture under excess pressure is passed from inside outwards through the porous deposit which is increasing in a tubular manner.

2. A method according to Claim 1, characterised in that the density of the deposit precipitation of the partially melted quartz glass globules during the drying process is adjusted to over 25% of the density of the solid quartz glass.

3. A method according to Claim 1, characterised in that for the drying gas mixture components of chlorine or thionyl chloride are used together with helium and/or argon and/or oxygen.

4. A device for preform production for quartz glass optical wave guides using a ceramic substrate rod, characterised in that as substrate rod a tube (7), porous in the deposition region, of oxide ceramic, preferably of aluminium- or zirconium oxide is used with a drying gas supply connection (8).

5. A device according to Claim 4, characterised in that the porous tube (7) has an internal diameter of between 0.5 cm and 20 cm, a wall thickness of a few millimetres and gas-tight sections (9) in the longitudinal region outside the deposition region.

## Revendications

1. Procédé de fabrication de préformes pour guides d'ondes lumineuses en verre de quartz, dans le cas duquel, par combustion, avec modification de l'endroit de la combustion, d'un mélange de gaz d'hydrolyse qui contient du tétrachlorure de silicium, on forme tout d'abord, par croissance, sur un barreau de céramique servant de substrat, également mobile, un dépôt poreux de forme tubulaire qui est constitué de petites billes de verre de quartz partiellement fondues et qui, au cours des processus thermiques suivants, se sépare d'avec le barreau servant de substrat, puis, avec amenée d'un gaz de séchage, on en réduit la teneur en ions OH et enfin, en augmentant encore la température, on le fond pour donner un barreau massif, caractérisé par le fait que déjà pendant la croissance du dépôt poreux résultant de la combustion du mélange de gaz d'hydrolyse et de préférence pendant quelques temps au-delà, on fait passer un mélange de gaz de séchage, en surpression, de l'intérieur vers l'extérieur, à travers le dépôt poreux qui croît en forme de tube.

2. Procédé selon la revendication 1, caractérisé par le fait que, pendant le processus de séchage, on fait passer la densité du dépôt des petites billes de verre de quartz partiellement fondues à une densité supérieure à 25% de la densité du verre du quartz massif.

3. Procédé selon la revendication 1, caractérisé par le fait que pour le mélange de gaz de séchage on emploie des proportions de chlore ou de chlorure de thionyle avec de l'hélium et/ou de l'argon et/ou de l'oxygène.

4. Dispositif pour la fabrication de préformes pour guides d'ondes lumineuses en verre de quartz avec emploi d'un barreau céramique servant de substrat, caractérisé par le fait que comme barreau servant de substrat on emploie un tube (7), poreux dans la zone du dépôt, de céramique d'oxyde, de préférence d'oxyde d'aluminium ou d'oxyde de zirconium avec un raccord (8) d'amenée de gaz de séchage.

5. Dispositif selon la revendication 4, caractérisé par le fait que le tube poreux (7) présente un diamètre intérieur valant entre 0,5 cm et 20 cm, une épaisseur de paroi de quelques millimètres et des portions (9) étanches au gaz, dans la zone longitudinale extérieure à la zone du dépôt.
